Europäisches Patentamt

European Patent Office

Office européen des brevets

(11) Publication number: **0 181 036**
**B1**

(12) **EUROPEAN PATENT SPECIFICATION**

(45) Date of publication of patent specification: **11.01.89**

(51) Int. Cl.⁴: **B 62 H 3/02,** B 62 H 3/12

(21) Application number: **85201773.0**

(22) Date of filing: **31.10.85**

(54) **Support for suspending a bicycle or the like from a wall.**

(30) Priority: **08.11.84 NL 8403398**

(43) Date of publication of application:
**14.05.86 Bulletin 86/20**

(45) Publication of the grant of the patent:
**11.01.89 Bulletin 89/02**

(84) Designated Contracting States:
**AT BE CH DE FR GB IT LI LU NL SE**

(56) References cited:
**CH-A- 285 977**
**DE-C- 459 286**
**GB-A-2 045 707**
**US-A- 606 118**

(73) Proprietor: **De Jong & Maaskant B.V.**
**Brouwersvaart 42**
**NL-2013 RA Haarlem (NL)**

(72) Inventor: **Schwarz, Peter Louis**
**Frans Schubertlaan 13**
**NL-2102 EJ Heemstede (NL)**

(74) Representative: **de Vries, Johannes Hendrik**
**Fokke et al**
**Octrooibureau Los en Stigter B.V. P.O. Box**
**20052**
**NL-1000 HB Amsterdam (NL)**

Courier Press, Leamington Spa, England.

## Description

The invention relates to a support for suspending a bicycle or the like from a wall, comprising a base that is attachable to the wall, a supporting arm that extends from said base and that is pivotable around a horizontal pivot pin between a working position, in which the supporting arm extends substantially perpendicularly to the wall, and a resting position, in which the supporting arm extends substantially parallel to the wall, the support further comprising a hook-like catching member positioned at the end of the supporting arm.

A support of this type is illustrated in the DE-C-459.286. This known support comprises a hook-like catching member with a fixed jaw and a jaw movable relative to the fixed jaw. When the supporting arm is pivoted from its resting position to its working position an activating rod for the movable jaw contacts the base and is shifted to close said movable jaw. In its resting position the supporting arm is held by a spring member attached to the base, whereas in its working position the supporting arm is connected to the base by means of a slotted pivotable plate. This known support according to the DE-C-459.286 comprises a large amount of elements making said support rather complicated.

It is an object of the invention to provide a support of the type referred to above being less complicated but nevertheless very effective.

Therefore the support according to the invention is characterized in that the base comprises two horizontal bearing surfaces positioned above and below the plane of the pivot pin, respectively, for supporting the supporting arm in the working position, and a horizontal and a vertical bearing surface for supporting the supporting arm in the resting position, wherein the lower horizontal bearing surface also constitutes the horizontal bearing surface for supporting the supporting arm in the resting position and wherein the supporting arm comprises at its end facing away from the catching member a closed slot entirely passing through said end, said slot in the working position of the supporting arm extending horizontally over some distance and having a slot width that is at least equal to the diameter of the pivot pin, said slot further comprising at its end facing towards the catching member a slot portion extending upwards in the working position of the supporting arm and between its two outer ends a slot portion extending downwards in the working position of the supporting arm.

Due to the combination of the bearing surfaces and the specially shaped slot through which the pivot pin extends the supporting arm is effectively held in its resting position as well as in its working position. For pivoting the arm from one position towards the other no complicated elements have to be (un)locked, moved or activated.

In an advantageous embodiment of the support the catching member is rotatable around a longitudinal axis of the supporting arm.

As a result the position of the catching member can be adjusted to the size or shape of bicycles to be supported without having to change the position of the base relative to the wall.

The invention will be elucidated further hereafter with reference to the drawing that shows an embodiment of the support according to the invention.

Fig. 1 shows two supports according to the invention attached to a wall and supporting a bicycle frame;

fig. 2 is a perspective view of a support according to the invention;

fig. 3 is a longitudinal section of a support according to the invention in its working position;

fig. 4 is a longitudinal section of a support according to the invention in its resting position, and

fig. 5 shows a top plan view of the hook-like catching member of the support according to the invention.

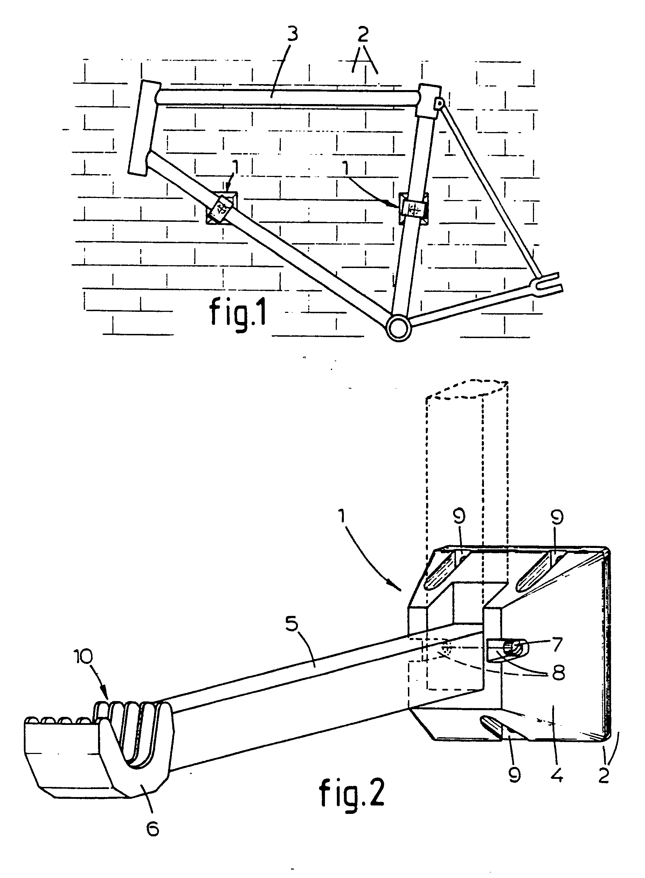

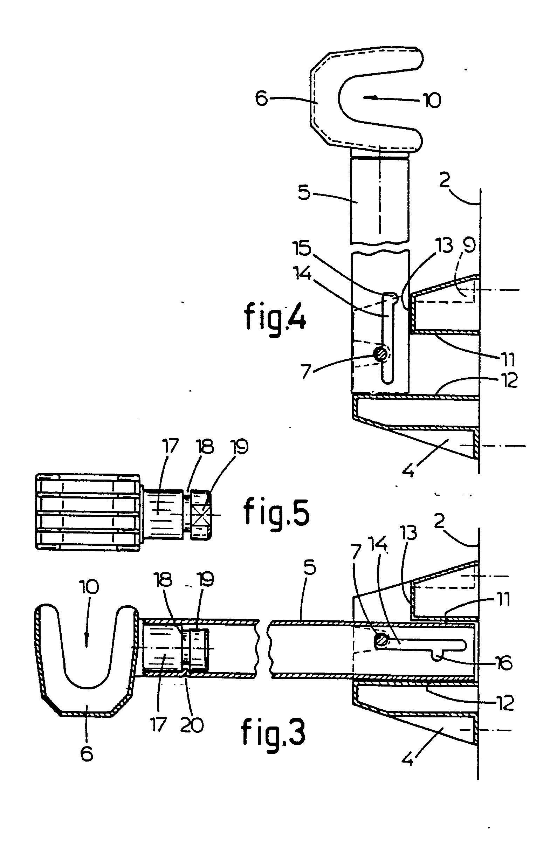

In fig. 1 two supports 1 are illustrated that are attached to a wall 2 and that support a bicycle frame 3. As appears clearly from fig. 2 each support 1 is built up from a base 4 that can be connected to the wall 2, a supporting arm 5 extending from the base 4 and being formed out of a tube with a square cross-section, and a hook-like catching member placed at the end of the supporting arm.

The supporting arm 5 is pivotable between a working position, in which it extends substantially perpendicularly to the wall 2, and a resting position represented in dotted lines in fig. 2, in which the supporting arm 5 extends substantially parallel to the wall 2. For ensuring the pivotability of the supporting arm 5 the base 4 comprises a pivot pin 7 that is supported in two wall sections 8 of the base 4 and that forms a horizontal pivot axis. This pivot pin 7 can exist of a simple nut-bolt joint but other designs are also possible. A releasable pivot pin 7 is preferred because it is possible than to release the supporting arm 5 from the base 4.

The connection of the base 4 to the wall 2 can be carried out with the usual screws, bolts etc, that fit into recesses 9 of the base 4.

The hook-like catching member 6 comprises a catch-opening 10 for receiving for example a tubular part of a bicycle.

For stable placing of the supporting arm 5, in the resting position as well as in the working position, it is important that the base 4 comprises at least one bearing surface for supporting the supporting arm 5. As appears from fig. 3 and 4 in the shown embodiment of the support 1 the base 4 therefore comprises two horizontal bearing surfaces 11 and 12, respectively, positioned above and below the plane of the pivot pin, respectively, for supporting the supporting arm 5 in the working position and a vertical bearing surface 13, that together with the horizontal bearing surface 12 is meant for supporting the supporting arm 5 in the resting position. So, the horizontal bearing surface 12 has a supporting function in the resting position as well as in the working position.

The supporting arm 5 comprises at its end facing away from the catching member 6 a closed slot 14 entirely passing through said end, said slot in the working position of the supporting arm 5 as illustrated in fig. 3, extending horizontally over some distance. This slot has a slot width that is at least equal to the diameter of the pivot pin 7.

When the supporting arm 5 has to be pivoted from its working position (fig. 3) into its resting position (fig. 4) it is at first drawn out of the base 4 over some distance, thereby displacing the pivot pin 7 through the slot 14. After the supporting arm 5 has been shifted in this way over a distance big enough it can be pivoted into its resting position, whereby its end facing away from the catching member 6 can move along the lower bearing surface 12 without restrictions, without this bearing surface 12 obstructing the pivotal motion. After the pivotal motion of the supporting arm 5 has been completed and this engaging the vertical bearing surface 13, the supporting arm 5 can be moved downwards until it rests with its end facing away from the catching member 6 on the lower bearing surface 12.

The slot 14 has at its end facing towards the catching member a slot portion 15 extending upwards in the working position. In the working position of the support 1 the pivot pin 7 rests in this slot portion 15. For this reason the supporting arm 5 has a slight motional freedom relative to the base 4 of which the two bearing surfaces 11 and 12 therefore do not enclose the supporting arm 5 with a close fit. Because a load applied to the catching member 6 presses the pivot pin 7 firmly into the slot portion 15, it is not possible to displace the supporting arm 5 relative to the base 4 without restrictions. For this reason the supporting arm 5 has to be raised at first so that the pivot pin 7 will be aligned with the slot 14 whereafter it is possible to shift the supporting arm 5.

Moreover the slot 14 comprises between its two ends a slot portion 16 extending downwards in the working position of the supporting arm 5, see fig. 3. As appears from fig. 4, the pivot pin 7 in the resting position rests in this slot portion 16. As a result a rotation of the supporting arm 5 is obstructed; this rotation can, however, take place when the supporting arm 5 will be shifted at first over a short distance in the direction facing away from the wall 2, thereby placing the pivot pin 7 in the slot 14.

Therefore the two slot portions 15 and 16 contribute to a stable placing of the supporting arm 5 in the working position and the resting position, respectively.

The catching member 6 can be rotated around a longitudinal axis of this supporting arm 5 and is provided with a cylindrical neck 17 that enables this rotation and that can be placed into a recess of the supporting arm 5. This cylindrical neck 17 is provided with a roundgoing groove 18, wherein between the end of the neck 17 and the roundgoing groove 18 a groove or flattening 19 extends in the longitudinal direction of the neck 17. The supporting arm 5 comprises a boss 20 projecting inwards into the neck 17 receiving recess, said boss being movable into the roundgoing groove 18 for rotatably locking the catching member 6 in the supporting arm 5.

For placing the catching member 6 into the supporting arm 5 the flattening 19 has to be aligned with the boss 20, whereafter the catching member 6 can be moved with its neck 17 into the recess in the supporting arm 5. By thereupon rotating the catching member 6, the boss 20 is brought into the roundgoing groove 18 and the catching member 6 is rotatably locked into the supporting arm 5.

Because the catching member 6 is mounted rotatably in the supporting arm 5 the position of the catching member 6 can be adapted to differently formed bicycle frames or the like.

Preferably, the base 4 and the catching member 6 of the support 1 are made of plastic, wherein the supporting arm 5 is manufactured from metal. A firm base 4 can be obtained by manufacturing it from nylon.

## Claims

1. Support for suspending a bicycle or the like from a wall (2), comprising a base (4) that is attachable to the wall (2), a supporting arm (5) that extends from said base (4) and that is pivotable around a horizontal pivot pin (7) between a working position, in which the supporting arm (5) extends substantially perpendicularly to the wall (2), and a resting position, in which the supporting arm (5) extends substantially parallel to the wall (2), the support further comprising a hook-like catching member (6) positioned at the end of the supporting arm (5), characterized in that the base (4) comprises two horizontal bearing surfaces (11, 12) positioned above and below the plane of the pivot pin (7), respectively, for supporting the supporting arm (5) in the working position, and a horizontal and a vertical bearing surface (12, 13) for supporting the supporting arm (5) in the resting position, wherein the lower horizontal bearing surface (12) also constitutes the horizontal bearing surface (12) for supporting the supporting arm (5) in the resting position and wherein the supporting arm (5) comprises at its end facing away from the catching member (6) a closed slot (14) entirely passing through said end, said slot (14) in the working position of the supporting arm (5) extending horizontally over some distance and having a slot width that is at least equal to the diameter of the pivot pin (7), said slot (14) further comprising at its end facing towards the catching member (6) a slot portion (15) extending upwards in the working position of the supporting arm (5) and between its two outer ends a slot portion (16) extending downwards in the working position of the supporting arm (5).

2. Support according to claim 1, characterized in that the catching member (6) is rotatable around a longitudinal axis of the supporting arm (5).

3. Support according to claim 2, characterized in that the catching member (6) has a cylindrical neck (17) that is provided with a roundgoing groove (18) and that the supporting arm (5) comprises a recess for receiving said neck (17), wherein a groove (19) or the like extending in the longitudinal direction of the neck (17) extends between the end of the neck (17) and said roundgoing groove (18) and wherein the supporting arm (5) comprises a boss (20) projecting into the neck (17) receiving recess, said boss (20) projecting into the roundgoing groove (18) for rotatably locking the catching member (6) in the supporting arm (5).

4. Support according to one of the preceding claims, characterized in that the supporting arm (5) is constructed of a tube with a square cross-section.

5. Support according to one of the preeceding claims, characterized in that the base (4) and the catching member (6) are manufactured from plastic, while the supporting arm (5) is manufactured from metal.

6. Support according to claim 5, characterized in that the base (4) is manufactured from nylon.

7. Support according to one of the preceding claims, characterized in that the pivot pin (7) can be loosened from the base (4).

**Patentansprüche**

1. Vorrichtung zum Aufhängen eines Fahrrads oder ähnlichem an einer Wand (2), mit einer an eine Wand montierbaren Basis (4), mit einem Tragarm (5), der sich ausgehend von der Basis (4) erstreckt und um einen horizontalen Lagerbolzen (7) zwischen seiner Haltelage, in der der Tragarm (5) sich im wesentlichen senkrecht von der Wand (2) ausgehend erstreckt, und einer Ruhelage, in der der Tragarm (5) sich im wesentlichen parallel zur Wand (2) erstreckt, drehbar gelagert ist, weiterhin mit einem am Ende des Tragarms (5) angebrachten Aufnahmeelement (6), dadurch gekennzeichnet, daß die Basis (4) zwei horizontale Auflagerflächen (12, 13) aufweist, von denen sich eine oberhalb und eine unterhalb der Ebene des Lagerbolzens (7) befindet, insbesondere um den Tragarm (5) in der Haltelage zu stützen, und eine horizontale und vertikale Auflagerfläche (12, 13), um den Tragarm (5) in der Ruhelage zu stützen, wobei die untere horizontale Auflagerfläche (12) gleichsam auch die horizontale Auflagerfläche (12) zum Stützen des Tragarms (5) in der Ruhelage bildet, daß der Tragarm (5) an dem dem Aufnahmeelement (6) gegenüberliegenden Ende ein Langloch (14) aufweist, das sich durch dieses Ende hindurch und in der Haltelage des Tragarms (5) horizontal über eine gewisse Länge erstreckt und eine Breite aufweist, die mindestens gleich dem Durchmesser des Lagerbolzens (7) ist, wobei dieses Langloch (14) weiterhin an seinem dem Aufnahmeelement (6) gegenüberliegenden Ende einen sich in Haltelage des Tragarms (5) aufwärts erstreckenden Langlochansatz (15) aufweist, und sich zwischen den beiden äußeren Enden des Langlochs in Haltelage das Tragarms (5) ein weiterer Langlochansatz (16) abwärts erstreckt.

2. Vorrichtung nach Anspruch 1, dadurch gekennzeichnet, daß das Aufnahmeelement (6) des Tragarms (5) um seine Längsachse drehbar ist.

3. Vorrichtung nach Anspruch 2, dadurch gekennzeichnet, daß das Aufnahmeelement (6) einen zylindrischen Schaft (17) aufweist, der mit einer Ringnut (18) versehen ist, daß der Tragarm (5) mit einer den zylindrischen Schaft (17) aufnehmenden Ausnehmung versehen ist, und sich eine Nut (19) oder etwas ähnliches in Längsrichtung des zylindrischen Schaftes (17) zwischen dem Ende des zylindrischen Schaftes (17) und dessen Ringnut (18) erstreckt, und daß der Tragarm (5) einen in die Ringnut (18) des zylindrischen Schaftes (17) hineinragenden Vorsprung (20) aufweist, wobei dieser Vorsprung (20) in die Ringnut (18) derart hereinragt, daß das Aufnahmeelement (6) drehbar in dem Tragarm (5) fixiert ist.

4. Vorrichtung nach einem der vorangehenden Ansprüche, dadurch gekennzeichnet, daß der Tragarm (5) aus einem Vierkantrohr besteht.

5. Vorrichtung nach einem der vorangehenden Ansprüche, dadurch gekennzeichnet, daß die Basis (4) und das Aufnahmeelement (6) aus Kunststoff hergestellt sind, während der Tragarm (5) aus Metall hergestellt ist.

6. Vorrichtung nach einem der vorangehenden Ansprüche, dadurch gekennzeichnet, daß die Basis (4) aus Nylon hergestellt ist.

7. Vorrichtung nach einem der vorangehenden Ansprüche, dadurch gekennzeichnet, daß der Lagerbolzen (7) von der Basis (4) gelöst werden kann.

**Revendications**

1. Support pour suspendre une bicyclette ou analogue à un mur (2), comprenant une embase (4) qui peut être fixée au mur (2), un bras (5) de support qui s'étend à partir de ladite embase (4) et qui peut pivoter sur un axe horizontal (7) de pivotement entre une position de travail, dans laquelle le bras (5) de support s'étend sensiblement perpendiculairement au mur (2), et une position de repos dans laquelle le bras (5) de support s'étend sensiblement parallèlement au mur (2), le support comprenant en outre un élément (6) de prise analogue à un crochet placé à l'extrémité du bras (5) de support, caractérisé en ce que l'embase (4) présente deux surfaces horizontales (11, 12) d'appui situées au-dessus et au-dessous du plan de l'axe (7) de pivotement, respectivement, pour supporter le bras (5) de support dans la position de travail, et des surfaces horizontale et verticale (12, 13) d'appui pour supporter le bras (5) de support dans la position de repos, la surface horizontale inférieure (12) d'appui constituant également la surface horizontale (12) d'appui pour supporter le bras (5) de support dans la position de repos et le bras (5) de support comprenant, à son extrémité tournée à l'écart de l'élément (6) de prise, une rainure fermée (14) traversant totalement ladite extrémité, ladite rainure (14), dans la position du bras (5) de support, s'étendant horizontalement sur une certaine distance et ayant une largeur qui est au moins égale au diamètre de l'axe (7) de pivotement, ladite rainure (14) comprenant en outre, à son extrémité tournée vers l'élément (6) de prise, une partie (15) de rainure s'étendant vers le haut dans la position de travail du bras (5) de support et, entre ses deux extrémités extérieures, une partie (16) de rainure s'étendant vers le bas dans la position de travail du bras (5) de support.

2. Support selon la revendication 1, caractérisé en ce que l'élément (6) de prise peut tourner autour d'un axe longitudinal du bras (5) de support.

3. Support selon la revendication 2, caractérisé en ce que l'élément (6) de prise comporte un collet cylindrique (17) qui présente une gorge circulaire (18), et en ce que le bras (5) de support présente un évidement destiné à recevoir ledit collet (17), une gorge (19) ou analogue, qui s'étend dans la direction longitudinale du collet (17), s'étendant entre l'extrémité du collet (17) et ladite gorge circulaire (18), et le bras (5) de support comprenant un bossage (20) faisant saillie dans l'évidement de réception du collet (17), ledit bossage (20) faisant saillie dans la gorge circulaire (18) pour verrouiller l'élément (6) de prise dans le bras (5) de support en lui permettant de tourner.

4. Support selon l'une des revendications précédentes, caractérisé en ce que le bras (5) de support est formé d'un tube de section transversale carrée.

5. Support selon l'une des revendications précédentes, caractérisé en ce que l'embase (4) et l'élément (6) de prise sont fabriqués en matière plastique, tandis que le bras (5) de support est fabriqué en métal.

6. Support selon la revendication 5, caractérisé en ce que l'embase (4) est fabriquée en Nylon.

7. Support selon l'une des revendications précédentes, caractérisé en ce que l'axe (7) de pivotement peut être libéré de l'embase (4).

EP 0 181 036 B1

fig.1

fig.2

fig.4

fig.5

fig.3